# EUROPEAN PATENT APPLICATION

(11) **EP 2 975 527 A2**
(43) Date of publication of application: **20.01.2016**
(21) Application number: 15176445.3
(22) Date of filing: 13.07.2015
(51) Int. Cl.: G06F 11/36

(54) **A METHOD FOR TRACING COMPUTER SOFTWARE**

(30) Priority: 15.07.2014 US 201462024479 P
(71) Applicant: 4D SOFT KFT., 1098 Budapest (HU)
(72) Inventor: FORGÁCS, István, H-1188 Budapest (HU)
(74) Representative: Harangozo, Gabor

(57) **Abstract**

A system and method for determining execution trace differences in a computer-implemented software application is provided herein. A software application under analysis is executed at least twice, thereby generating first and second execution trace and associated first and second sets of execution data describing all the necessary data gained by program instrumentation at each program statement of source or bytecode level. These data are stored for at least two executions of the software application. This data is then compared to determine a set of differences between the first and second executions of the program. The set of differences may contain statement coverage data, execution trace data, variable values or influences among program instructions. The differences can be arranged according into historical order. The differences then can be analyzed to identify the location of the fault in the program or to map the related code to a feature in unknown code.

## Description

### BACKGROUND OF THE INVENTION

### 1. Field of the Invention

Present invention relates generally to a method for debugging a computer software, in particular a method for debugging a defect/malfunction in a computer software. The technology described in this patent application is generally directed to the field of software code instrumentation, where code fragments are inserted into the system. This code stores the program state at each execution point. The compared data for two program executions can be used for defect tracking, or debugging. More specifically, the technology provides a system and method for determining those code parts which behave in a different way for two different executions.

### 2. Description of the Related Art

Complex software applications typically comprise millions of lines of code. When executed and the execution is failed the number of executed steps maybe hundreds of millions. It is difficult to find a bug even in among some thousands of executed program statements.

To find bugs debuggers are frequently used. If the application program crashes (when a programming bug prevents the application program from progressing) or shows the wrong behavior, a programmer can run the application program under the control of the debugger. The debugger can then run through the application program in a step by step (single-stepping) manner, stopping (breaking, i.e., pausing the program to examine the current state) at some kind of event by means of a breakpoint, and tracking the values of some variables.

However, there are disadvantages and drawbacks with this conventional method of debugging. One of the most serious problems is that failures may be non-reproducible. In this case debuggers are useless. Another problem is when the test/execution fails at the user/tester side; however the developer is not able to reproduce the bug in his or her development environment.

US 7.810.079 B2 describes a system and method for determining execution path differences in a computer-implemented software application is provided herein. A software application under analysis is executed at least twice, thereby generating first and second call tree data and associated first and second sets of execution data describing the at least two executions of the software application. This data is then compared to determine a set of differences between the first and second executions of the program, the set of differences comprising one or more nodes that are either called differently in the first and second execution paths or executed differently in the first and second sets of execution data. For each node identified in the set of differences, the first and second call trees are then analyzed to identify at least one parent node that is the root cause of the difference in the execution data.

### SUMMARY OF THE INVENTION

The present invention is to substantially solve at least the above described problems and/or disadvantages and to provide at least the advantages described below. Accordingly, the object of the present invention is to provide a method for tracing or debugging a computer program resulting in unambiguously showing the differences easing to find the location of a malfunction or discovering unknown functions.

This object is solved by the subject matter of the independent claims.

Preferred embodiments are defined by the dependent claims.

According to one aspect of the present invention, by using a new execution comparison method all the differences of the executions are revealed. Analyzing these differences the cause of the failures can be found. In other cases the differences found are the good starting points of further debugging. In the proposed method it is assumed that for one of the executions (tests) - say execution1 - the result value is good (test passed) while for the other execution - say execution2 - the result value is wrong (test failed). The difference in executions may indicate the problem.

### BRIEF DESCRIPTION OF THE DRAWINGS

The above object and other aspects, features and advantages of embodiments of the present invention will become more apparent from the following detailed description when taken in conjunction with the accompanying drawings in which:
FIG. 1 illustrates a block diagram of a system for determining execution differences,
FIG. 2 illustrates a flow diagram on the determination of the first difference of two executions,
FIG. 3 illustrates a flow diagram on determining the execution differences for given entities, and
FIG. 4 illustrates a screen view of execution differences.

### DETAILED DESCRIPTION OF THE PREFERRED EMBODIMENT

The present invention will be described herein below with reference to the accompanying drawings. In the following description, detailed descriptions of well-known functions or constructions are omitted for clarity and conciseness.

In the following Example 1 a sample program is shown to demonstrate a preferred embodiment of the proposed method:

### (Example 1)

```
    1 while (elapsed_time < 0.001msec)
    2 x++;
    3 for (j = 1, j <= 2, j++) {
    4 if (x < 4)
    5 x = x * 3;
    6 else
    7 x = x - 3;
         }
    8 if (x > 5)
    9 print (x) ;
    10 else
    11 print (10 - x) ;
```

The execution of the first loop (1-2) may result in different values of x on different machines depending on the speed of the machine. The non-deterministic value of x results in whether the then (5) or the else (7) branch will be executed. The remaining part of the code contains a simple for loop with an if predicate where both the then and the else branch is an assignment statement for variable x. The final predicate contains two different print statements for variable x.

Table 1 shows an execution trace (Trace I) when executing the sample code listed above. The execution ID means the IDth execution step a statement in code has been executed (called action). Thus ID = 1 means that firstly
while (elapsed_time < 0.001msec) executed. The second time x++ executed (ID=2), then
while (elapsed_time < 0.001msec) executed again as a third execution step (ID=3).
Both while (elapsed_time < 0.001msec) and x++ are executed four times. There are 16 execution steps. The last execution is print (10 - x) that is the 16^{th} execution.

**(Table 1-Trace I)**

| Execution ID | Statement | Variable with value |
|---|---|---|
| 1 | while (elapsed_time < 0.001msec) | |
| 2 | x++ | x=1 |
| 3 | while (elapsed_time < 0.001msec) | |
| 4 | x++ | x=2 |
| 5 | while (elapsed_time < 0.001msec) | |
| 6 | x++ | x=3 |
| 7 | while (elapsed_time < 0.001msec) | |
| 8 | x++ | x=4 |
| 9 | for(j = 1, j<=2, j++) { | j=1 |
| 10 | if (x < 4) | x=4 |
| 11 | x = x - 3 | x=1 |
| 12 | for(j = 1, j<=2, j++) { | j=2 |
| 13 | if (x < 4) | x=1 |
| 14 | x = x * 3; | x=3 |
| 15 | if (x > 5) | x=3 |
| 16 | print (10 - x); | print value=7 |

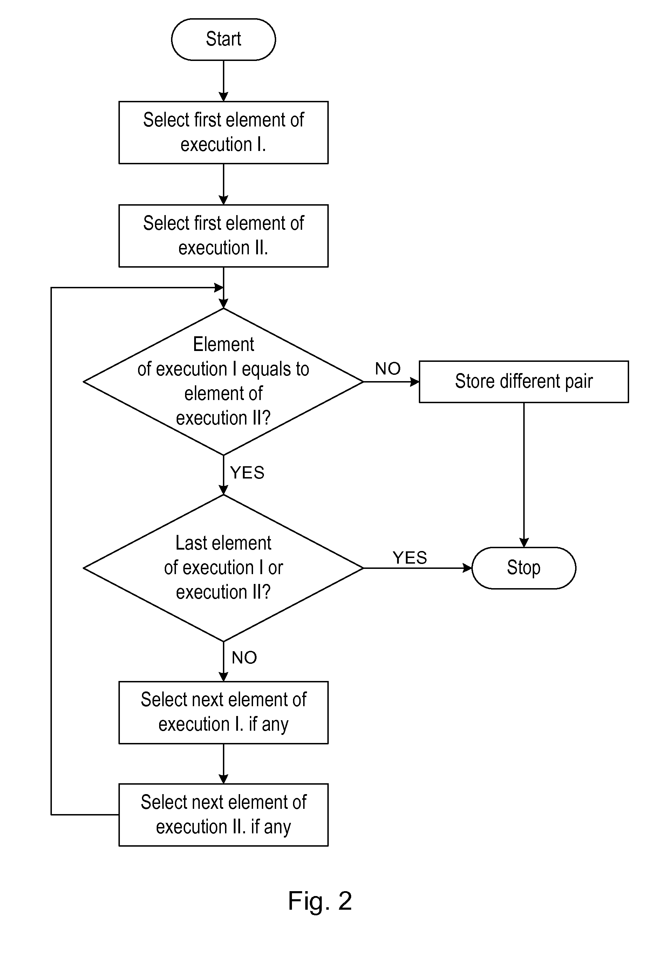

Table 2 shows another execution trace (Trace II) when executing the sample code listed above. In this case both while (elapsed_time < 0.001msec) and x++ are executed only three times. The cause is that execution trace II has been executed on a slightly slower computer. There are only 14 execution steps since the first two code instructions have been executed once less. The last execution is print (10) that is the 14^{tn} execution step (action) and different from the execution trace of FIG. 2.

**(Table 2-Trace II)**

| Execution ID | Statement | Variable with value |
|---|---|---|
| 1 | while (elapsed_time < 0.001msec) | |
| 2 | x++ | x=1 |
| 3 | while (elapsed_time < 0.001msec) | |
| 4 | x++ | x=2 |
| 5 | while (elapsed_time < 0.001msec) | |
| 6 | x++ | x=3 |
| 7 | for(j = 1, j<=2, j++) { | j=1 |
| 8 | if (x < 4) | x=3 |
| 9 | x = x * 3; | x=9 |
| 10 | for(j = 1, j<=2, j++) { | j=2 |
| 11 | if (x < 4) | x=9 |
| 12 | x = x - 3; | x=6 |
| 13 | if (x > 5) | x=6 |
| 14 | print (x) ; | print value=6 |

An execution difference on program statement level contains a statements if it is only in one of the execution traces. Considering the executions in Table I and II, the statement level differences are, print (10 - x) ; and print (x) ; since print (10 - x) ; is executed only in execution trace I, while print (x) ; is executed only in execution trace II. The differences are in Table 3.

**Table 3-statement level execution differences**

| Statement | Trace |
|---|---|
| print (10 - x) | I |
| print(x) | II |

Table 4 below shows the execution differences at execution trace level. Execution trace differences can be defined in different ways, we selected a reasonable one.

### Definition of execution trace differences.

Let us assume two execution traces: Trace I and Trace II
1) Considering the i^{th} execution of a statement *s* in Trace I. If there is no i^{th} execution of *s* in trace II, then i^{th} execution of *s* is an execution trace difference.
2) Let the set of statements in the execution Trace I, where the last trace element is the i^{th} execution of a statement *s*, be T1. Let the set of statements in the execution Trace II where the last trace element is the same i^{th} execution of statement *s*, be T2. If T1 and T2 differ, then i^{th} execution is an execution trace difference.
3) A statement *s* which is in Trace I but missing from Trace II or is in Trace II but missing from Trace I is an execution trace difference.

Considering Trace I and Trace II:
Case 1) occurs for the 4^{th} execution of while (elapsed_time < 0.001msec) and x++ since it is missing in Trace II. According to case 2) the first execution of x = x - 3 is also in the trace difference list, since Trace II contains x = x * 3; while Trace I doesn't. For similar reasons,
x = x * 3;
if (x < 4)
for(j = 1, j<=2, j++)
are also among the differences. Finally, according to case 3) print (x) and print (10 - x) ; are also execution trace differences. See Table 4.

**(Table 4 - execution trace differences)**

| Execution ID | Statement | Trace |
|---|---|---|
| 7 | while (elapsed_time < 0.001msec) | I |
| 8 | x++ | I |
| 10/12 | for(j = 1, j<=2, j++) | II/I |
| 11/13 | if (x < 4) | II/I |
| 14 | x = x * 3; | I |
| 12 | x = x - 3; | II |
| 16 | print (10 - x) | I |
| 14 | print(x) | II |

We can define execution differences at variable value level in different ways. Our reasonable definition is as follows.

Let us assume two execution traces: Trace I and Trace II

Assume that in Trace I the value of a variable *v* assigned or used at the i^{th} execution of statement *s* is x. Assume that in Trace II the value of the same variable *v* assigned or used at the same i^{th} execution of *s* is y. If x≠y, then the i^{th} execution of *s* is a variable value level difference.

Note that we do not consider a difference if there is no i^{th} execution of *s* in one of the traces.

Table 5 below shows the execution differences at variable value level from the perspective of execution trace I. The first difference is when value of variable x is 4 at if (x < 4).

From here each x value is different.

**(Table 5-execution differences at variable value level in Trace I)**

| Execution ID | Statement | Variable with value |
|---|---|---|
| 10 | if (x < 4) | x=4 (3) |
| 11 | x=x-3 | x=1 (6) |
| 13 | if (x < 4) | x=1 (9) |
| 14 | x = x * 3; | x=3 (9) |
| 15 | if (x>5) | x=3 (6) |

Table 6 below shows the first difference occurs in influences. A statement s1 (dynamically) influences another statement s2 if the value of a variable *v* assigned in s1 is referenced in s2.An influence is a triple I=(var, s1,s2), where var is the variable, s1 the influencing statement which influences s2. A possible definition: a difference for influences happens if there is an influence I=(v, s1, s2) in Trace I which is not in Trace II or reversely. - In the execution traces the first influence is when x++ has an influence on itself at the subsequent iteration. The first difference is that x++ has an influence on x = x - 3 in Trace I, while has an influence on x = x * 3; in Trace II. The second difference is that x at statement 7 (x = x - 3;) influences statement 5 (x = x * 3;)4.

**(Table 6 - influence differences for Trace I)**

| |
|---|
| (x, 2, 7) |
| (x, 7, 4) |
| (x, 7, 5) |
| (x, 5, 8) |
| (x, 5, 11) |

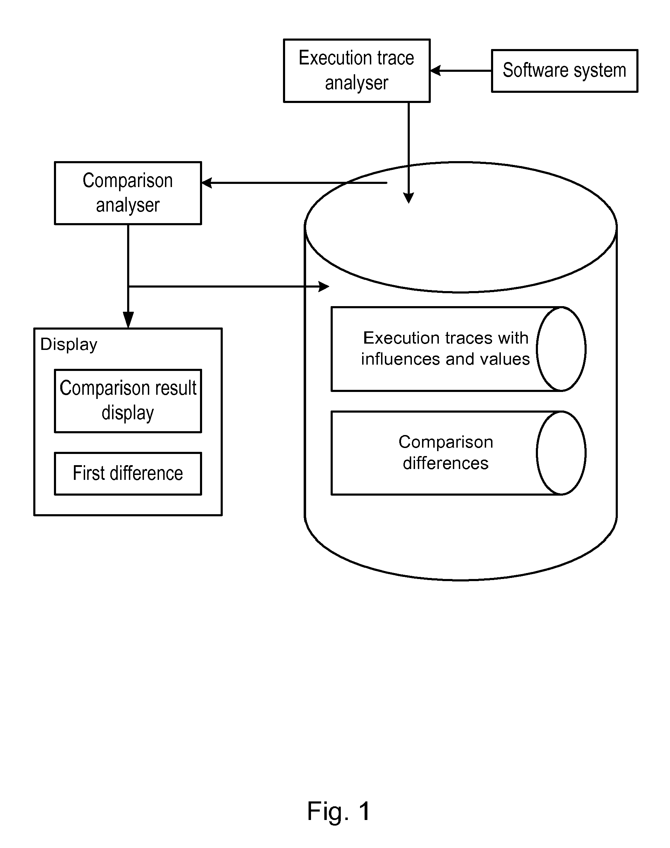

FIG. 1 shows the block diagram of a system which determines the execution differences. The software system containing the code is running and the execution trace analyzer-see e.g. US 20030159133 A1- recognizes and stores all the necessary data of the execution. The execution trace analyzer syntactically analysis the source or byte code. Based on this analysis it instruments the source byte code which means that it inserts probes i.e. function calls at each relevant part of the system to be analyzed. This may happen in a static way without executing the code.

The inserted probes are used when the code to be analyzed is executed. When the code is running, these functions are also executed and all the necessary information about the executed code parts (basic program instructions) is stored. The necessary information can be execution trace id, the variables assigned and referenced, the values of the variables, and the code parts that influences these variable.. The trace information is stored continuously while the program is running.

The relevant data are the instructions executed, the value of the variables defined and used, and the influences of the variable just executed. The analyzer also stores the step number, i.e. the ID of the execution. In this way actions are also stored. All the necessary data are stored in a database for all the executions.

The comparison analyzer compares any two selected executions from the database. The comparison is based on instruction and/ or execution trace and/ or variable value and/or influences. The comparison analyzer takes the elements of the execution history one-by-one compares the elements, and if they are different, the analyzer sends the pair into the comparison differences of the database.

The result of comparison is displayed in an appropriate form and/or stored in the database. All the differences, a relevant part of the differences or just the first difference can be displayed.

FIG. 2 shows the flow diagram of the determination of the first difference of two executions. It is assumed that the order of the elements is the same if the two executions is identical, since the recording process is identical. Starting the process the method selects the first element of execution I. The element can be any relevant entity stored in the database. For example, it can be a program instruction an executed program instruction called action, a value of a variable, an influence among to program instructions, etc. Then the first element of execution II has been selected. If these elements are different, then this pair is stored and the method stops. If not, the method investigates whether these are the last elements in the execution traces. If yes, then the method stops. If not, then the next element from execution I. is selected. If there is no element, then we assume an empty element. Then the next element from execution II is selected. If there is no element, then we assume an empty element. Then these elements are compared as happened for the first elements and if they are different, then they are stored in the comparison differences in the block diagram.

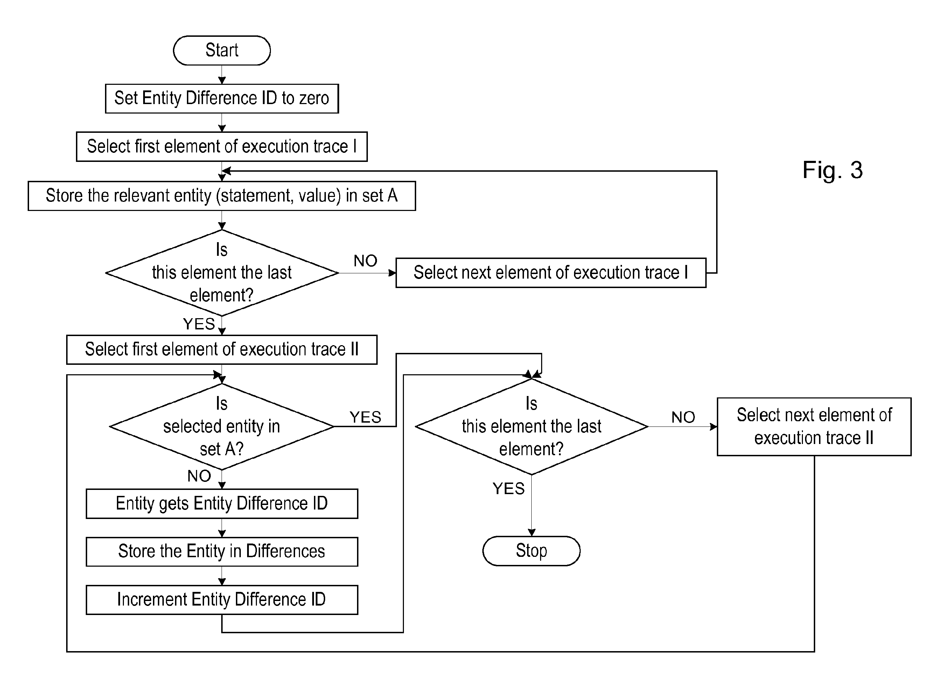

FIG. 3 shows the flow diagram of the method of selecting differences of program executions. First, the method sets an Entity Difference ID to zero. This ID contains the i-th execution differences or the i-th execution differences group. Next, the method selects the first element from execution trace I. The element can be any relevant entity stored in the database. For example, it can be a program instruction an executed program instruction called action, a value of a variable, an influence among to program instructions, etc. This element is stored in a set A. If this element is not the last, we select the next one and store it in set A as well. If we reach the last element, we select the first element from execution trace II. We investigate whether this element is a member in set A, and if not, then this element gets Entity Difference ID, then we store this element in set Differences, and finally in increment Entity Difference ID. Then in both cases, i.e. element is or is not in set A, we investigate whether the selected element of execution trace II is the last one. If so the method stops, otherwise we select the next element from execution trace II and investigate whether it's a member of Set A.

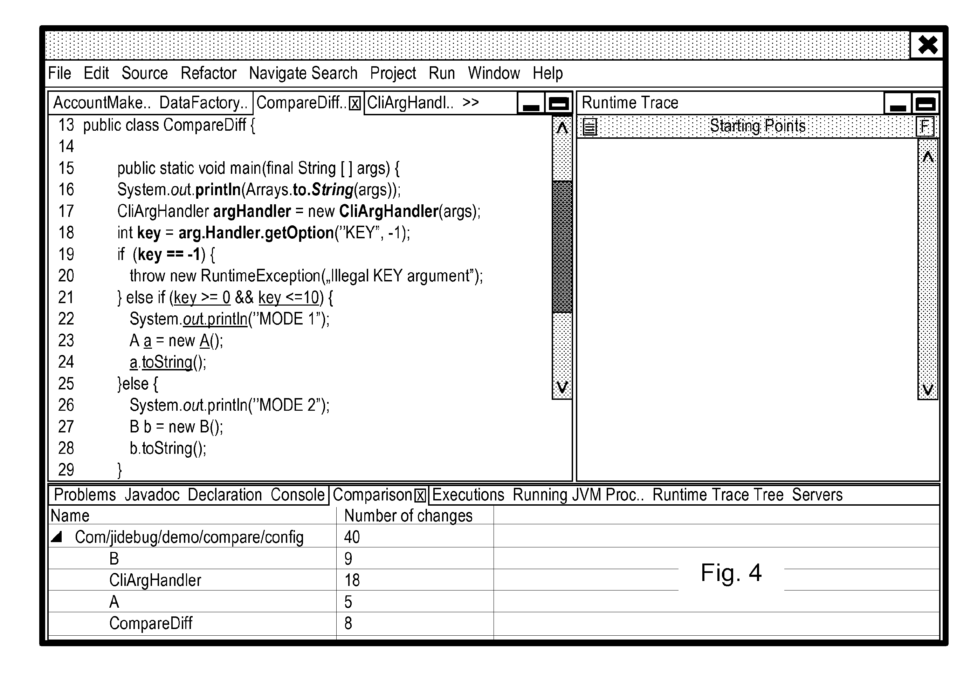

FIG. 4 shows the screen with the results of execution differences. In the upper left window there is the program code executed at least twice. The yellow highlight shows the executed statements for execution I. The red highlight shows the difference, i.e. the statements executed in execution I. but did not execute during execution II. In the bottom window we can see the classes for which there are any differences with the number of differences. By clicking on any class the first difference will be displayed for that class. In our example class CompareDiff has been selected and four of the 8 differences can be seen between lines 21 and 24.

While the invention has been shown and described with reference to an exemplary embodiment thereof, it will be understood by those skilled in the art that various changes in form and details may be made therein without departing from the scope of the invention as defined by the appended claims.

## Claims

1. A method for tracing computer software consisting of software code, comprising the steps of
- starting and running a first exemplar of the software to be traced by inserting probes after each statement;
- starting and running a second exemplar of the software to be traced in by inserting probes after each statement a control environment;
- collecting and storing of the runs in a comparable manner;
- comparing the results of the runs;
- on basis of the comparison find at least one difference in the collected results; and
- displaying the first, second and nth difference for localizing the place and/or cause of said difference.

2. A method for tracing computer software consisting of software code, comprising the steps of
- starting and running a software exhibiting defective behavior;
- inserting probes into the stream of code of the software exhibiting defective behavior, at least after predetermined statements or after each statement,
- starting and running a software exhibiting no defective behavior
- inserting probes into the stream of code of the software exhibiting no defective behavior, at least after predetermined statements or after each statement;
- collecting and storing of the runs in a comparable manner;
- comparing the results of the runs;
- on basis of the comparison find all differences in the collected results; and
- displaying the first, second or any differences for localizing the place and/or cause of said difference.

3. A method for debugging a defect or malfunction in a computer software consisting of software code, comprising the steps of
starting and running the software exhibiting defective behavior,
inserting probes into the stream of code at predetermined places, at least after predetermined statements or after each statement, collecting and evaluating the result of the traced code, and
on basis of the result of the traced code, displaying the collected information which may or may not reveal any fault causes the observable deviation from the planned/expected result.
**characterized in**
for debugging, starting and running an exemplar of the software exhibiting no defective behavior;
wherein probes are inserted after each statement into the stream of code of the software exhibiting no defective behavior; then
in course of each software run, collecting intermediate states and values of the code influenced by the inserted probes;
comparing the results of the collected intermediate states and values of the code of the respective software runs,
on basis of the comparison find at least one difference in the collected results, and
displaying at least the first difference for localizing the place and/or cause of the malfunction.

4. The method according to any of claims 1 to 3 **characterized in** inserting probes into the stream of code on one of a byte code level, an object code level or a source code level.

5. The method according to any of claims 1 to 3 **characterized in** grouping the differences so that consecutive instructions are in the same group.

6. The method according to any of claims 1 to 3 **characterized in** storing the differences in a matrix.

7. The method according to claim 6 **characterized in** providing the matrix as a data base.

8. The method according to one of claims 1 to 3 **characterized in** ordering the differences based on execution order and/or groups.

9. A computer program product comprising storage means comprising code executing the method according to any of claims 1 to 8 when executed on a computer means.

10. A computer program product comprising storage means comprising codes executing the method according to any of claims 2 to 8 when executed on a computer means.

11. A computer program product comprising storage means comprising codes executing the method according to any of claims 3 to 8 when executed on a computer means.
